Europäisches Patentamt

European Patent Office

Office européen des brevets

(11) Publication number: **0 483 892 A1**

# EUROPEAN PATENT APPLICATION

(21) Application number: **91202542.6**

(22) Date of filing: **01.10.91**

(51) Int. Cl.5: **C09K 11/02**

(30) Priority: **29.10.90 IT 2190590**

(43) Date of publication of application:
**06.05.92 Bulletin 92/19**

(84) Designated Contracting States:
**AT BE CH DE ES GB LI LU NL**

(71) Applicant: **NUOVA SACELIT S.p.A.**
**Via S. Bernardino, 149**
**I-24100 Bergamo(IT)**

(72) Inventor: **Marino, Rodolfo**
**Via Tre Armi 13**
**I-24100 Bergamo(IT)**
Inventor: **Torio, Gianrocco**
**Via Pancaldo 9**
**I-20129 Milan(IT)**

(74) Representative: **Henke, Erwin et al**
**Ing.Barzanò & Zanardo Milano S.p.A. Via**
**Borgonuovo, 10**
**I-20121 Milano(IT)**

(54) Method for producing phosphorescent articles, and the articles obtained.

(57) The method comprises mixing a phosphorescent substance with a hardenable substance temporarily in the fluid state. The hardenable substance can comprise a cement or resinous matrix. The article obtained is phosphorescent and has excellent mechanical strength and resistance to the aggressive chemical substances usually found in the air. When suitably shaped, the article can be used for example as an indicating sign or as a facing in the building industry.

EP 0 483 892 A1

In non-illuminated environments, whether closed or open, it is known to use fluorescent components having the characteristic of emitting light when energized by a light source.

In this manner they indicate their position to persons in their proximity, and hence indirectly indicate the position of any obstacles with which they are associated. However, in contrast to phosphorescent components, fluorescent components are able to emit light only during the time in which they are excited, and are ineffective when the exciting light source is no longer available.

The use of such components or articles is however general along roads in which the headlamps of transiting vehicles form a valid exciting light source.

Where it is not possible to provide a substantially continuous exciting light source, phosphorescent articles are used, these however being able to emit light for a period of time following the activating action of the light source.

Such articles are used in environments, including external environments, which remain non-illuminated for a varying time. Known phosphorescent articles are substantially prepared by applying a coating of active substance to a support element.

The coating is applied by various methods, which will not be described for reasons of brevity.

Notwithstanding their excellent characteristics, there has been no widespread acceptance of phosphorescent articles because of the fact that the coating of active substance can be scratched, and is easily attacked by substances such as dust and chemical compounds present in substantial concentrations in the air, and in particular in environments exposed to atmospheric agents. Consequently, as known phosphorescent articles have a short useful life relative to fluorescent articles, they are little used compared with these latter.

To limit the wear of phosphorescent articles and hence increase their range of use, it could well be considered to locate the coating of active substance between the support and a further protective coating.

However, apart from the fact that it would not always be possible to obtain satisfactory adhesion between the parts in this manner, and that the application of a protective layer on the coating of active substance could affect the phosphorescent characteristics of the product, other considerations arise such as the technical difficulties of forming a multi-layer article and the high production cost, in that each layer material has to be prepared individually in separate process stages, with further separate stages involved in their application.

The prior art is therefore unable to offer an adequate solution to the problem.

The object of the present invention is to provide a method for producing phosphorescent articles which is both simple and economical, and by which phosphorescent articles can be obtained in which the active substance is of maximum effectiveness, is unattackable by chemical substances, especially those present in atmospheric agents, and is resistant to mechanical wear.

This object is attained according to the invention by a method for producing phosphorescent articles, characterised by comprising a first stage in which a hardenable substance is prepared in a substantially fluid state, a second stage in which said hardenable substance is mixed with a phosphorescent substance, and a third stage in which said hardenable mixture is moulded until it reaches consistency and hence attains the relative mechanical characteristics.

This method produces a phosphorescent article characterised by comprising preferably a compact laminar structure within which a phosphorescent substance is dispersed.

Surprisingly, the phosphorescence of the phosphorescent substance is not compromised by the opacity of the hardenable substance, so that the article obtained is able to emit light for a considerable time period after the exciting action of a light source has ceased.

A phosphorescent article of the invention is therefore prepared by mixing a phosphorescent substance with a hardenable substance in the fluid state.

The compound obtained is then shaped in suitable moulds or forms or other similar means until a sufficient consistency has been attained for it to be then handled and processed, for example mirror-smoothed on at least that one of the surfaces which is to become the active surface.

One phosphorescent substance which can be used is for example the Hoechst product known as Verde Lumilux N.G. 50086, which can be used in a quantity of up to more than 70% of the hardenable substance.

This product has the following characteristics:

| | | |
|---|---|---|
| – wavelength | 520 nanometres; | |
| – brilliance expressed in millicandles/m$^2$ | | |
| 130 | | 3 minutes after excitation |
| 32 | 10 | " " |
| 9 | 30 | " " |
| 4 | 60 | " " |
| 0.32 | 500 | " " |

This last figure represents the visible threshold of the human eye.

The hardenable substance comprises granulated marble or silica, powdered marble or silica, and cement.

Polyester or epoxy resins or a mixture thereof can be used as an alternative to cement. If cement is used, white cement is preferred.

In this case, to improve the dispersion of the phosphorescent substance it is preferable to mix it with the cement before this is mixed with the other components of the mixture.

The hardenable substance performs the important function of supporting and protecting the phosphorescent substance.

However, if the used hardenable substance is of cement matrix type, it presents the typical capillary porosity of concrete.

This capillary porosity of concrete is a negative factor for the life of the material because the penetration of aggressive agents into its interior is not properly prevented, with the result that it degrades with time.

To overcome the inherent porosity of a concrete article, an impregnation stage is provided prior to the hardening stage. The impregnation nullifies the capillary porosity, to give the article compactness and impermeability in addition to substantially improving its mechanical characteristics. By increasing surface brightness the impregnation also improves the optical characteristics of the article.

The higher mechanical strength and the greater resistance to chemical attack (almost three times that of an identical non-impregnated article), allow articles to be shaped with a larger surface/thickness ratio. Such articles can be used in the building industry for covering already existing structures and also for forming indication panels.

The impregnation, subsequent to the curing of the article, comprises a drying stage, a stage of immersion in a monomer or polymer solution, and a stage of heating to a temperature indicatively of between 70 and 80°C to allow thermocatalytic polymerization of the monomer substance.

This latter stage is preferably conducted with the article immersed in an alkaline solution of water and sodium hydroxide. Two examples are given hereinafter by way of illustration, of which example 1 relates to an article containing white cement, whereas Example 2 relates to an article containing a catalyzed polyester resin.

EXAMPLE 1

A concrete mix was formed consisting of:
a) 55% of granulated marble with a particle size of between 1 and 4 mm,
b) 25% of powdered marble with a particle size of between 0.1 and 0.3 mm,
c) 20% of white cement,
plus water to a water/cement ratio of 0.42, and to this was added a phosphorescent substance in a quantity of 50% of the weight of the cement.

The phosphorescent substance has the following characteristics:

| | | |
|---|---|---|
| – wavelength | 520 nanometres; | |
| – brilliance expressed in millicandles/m$^2$ | | |
| 130 | 3 minutes after excitation | |
| 32 | 10 | " " |
| 9 | 30 | " " |
| 4 | 60 | " " |
| 0.32 | 500 | " " |

with a limiting threshold for the human eye of 0.32 millicandles/m$^2$ measured 500 minutes after excitation.

After curing in a humid environment for 30 days the phosphorescent concrete in the form of sheets of size 200 x 5 mm was impregnated by the following procedure:

A) Drying at 120°C for 8 hours;

B) Impregnating the dried product with methyl methacrylate for 6 hours;

C) Polymerizing the impregnated monomer at 75°C for 4 hours.

The mechanical bending strength of the sheets was measured before and after impregnation, the result being 85 and 230 kg/cm$^2$ respectively.

Brightness measurements were taken on polished sheets, giving a value before impregnation of 25 millicandles/m$^2$ 3 minutes after excitation and a value after impregnation of 30 millicandles/m$^2$.

The same measurements taken after 12 months of exposure of the sheets to the action of atmospheric agents gave a value of 20 for the non-impregnated sheets and 29 for the impregnated sheets, this latter value being practically equal to the initial value.

EXAMPLE 2

A mixture was formed consisting of:

a) 56% of granulated marble with a particle size of between 1 and 6 mm,

b) 37% of powdered marble with a particle size of between 0.06 and 0.3 mm,

c) 7% of catalyzed polyester resin,

and to this was added a phosphorescent substance in a quantity of 10% of the weight of the mixture. The phosphorescent substance had the same characteristics as in Example 1.

After hot crosslinking of the resin, the phosphorescent conglomerate in the form of sheets of size 200 x 100 x 10 mm was tested for mechanical characteristics, obtaining a mechanical bending strength of 180 kg/cm$^2$.

Brightness measurements were taken on polished sheets, giving a value 28 millicandles/m$^2$ 3 minutes after excitation. The same measurements taken after 12 months of exposure of the sheets to the action of atmospheric agents gave a lower value of 22, this value however still being acceptable.

For economic reasons, the phosphorescent substance contained in the article can be limited to at least one outer layer of the article.

**Claims**

1. A method for producing phosphorescent articles, characterised by comprising a first stage in which a hardenable substance is prepared in a substantially fluid state, a second stage in which said hardenable substance is mixed with a phosphorescent substance, and a third stage in which said hardenable mixture is moulded until it reaches consistency and hence attains the relative mechanical characteristics.

2. A method as claimed in claim 1, characterised in that the phosphorescent substance is added in a quantity indicatively of up to more than 70% by weight of the hardenable substance, said phosphorescent substance having the following characteristics:

| – | wavelength | 520 nanometres; |
|---|---|---|

– brilliance expressed in millicandles/m²

| 130 | | 3 minutes after excitation |
|---|---|---|
| 32 | 10 | " " |
| 9 | 30 | " " |
| 4 | 60 | " " |
| 0.32 | 500 | " " |

3. A method as claimed in claim 2, characterised by comprising a fourth stage in which at least one surface of the article is polished.

4. A method as claimed in claim 3, characterised in that the hardenable substance is prepared by mixing granulated marble or silica of maximum particle size indicatively between 1 and 4 mm with powdered marble or silica of maximum particle size indicatively between 0.1 and 0.3 mm and cement.

5. A method as claimed in claim 4, characterised in that the hardenable substance is prepared by mixing together 55% of granulated marble or silica, 25% of powdered marble or silica and 20% of white cement; the phosphorescent substance being mixed in in a quantity of 50% of the weight of the cement.

6. A method as claimed in claim 5, characterised in that the phosphorescent substance is directly mixed with the cement.

7. A method as claimed in claims 1 and 3, characterized by comprising a fifth stage involving impregnation by a monomer polymerizable thermocatalytically in situ.

8. A method as claimed in claim 7, characterised in that the fifth impregnation stage comprises the following substages:
   - a first substage involving drying by heating preferably in an oven to a temperature generally not exceeding 150°C for the time required to stabilize the weight of the article;
   - a second substage in which the article is immersed in a monomer solution to seal the pores of the cement matrix of the article;
   - a third substage in which the monomer is polymerized thermocatalytically at a temperature indicatively of between 70 and 80°C.

9. A method as claimed in claim 8, characterised in that the concrete article is impregnated with polymethylmethacrylate in a quantity indicatively of between 2 and 6% of its weight.

10. A method as claimed in claim 9, characterised in that the article obtained is a plate of size 200 x 100 x 5 mm; the first substage comprising heating to 120°C for a time of 8 hours; the second substage comprising immersion of the article in methyl methacrylate for a time of 6 hours; the third stage comprising heating to a temperature of 75°C for 4 hours.

11. A method as claimed in claim 3, characterised in that the hardenable substance is a synthetic resin obtained from polyester or epoxy resins.

12. A method as claimed in claim 11, characterised in that the hardenable substance is prepared by mixing granulated marble or silica of maximum particle size indicatively between 1 and 6 mm with powdered marble or silica of maximum particle size indicatively between 0.06 and 0.3 mm and catalyzed polyester or epoxy resin.

**13.** A method as claimed in claim 12, characterised in that the hardenable substance is prepared by mixing together 56% of granulated marble or silica, 37% of powdered marble or silica and 7% of catalyzed polyester or epoxy resin; the phosphorescent substance being mixed in in a quantity of 10% of the weight of the article.

**14.** A phosphorescent article characterised by comprising a compact laminar structure within which there is dispersed a phosphorescent substance, the presence of which can be limited to at least one outer layer of the article.

**15.** An article as claimed in claim 14, characterised in that the rigid laminar structure within which the phosphorescent substance is dispersed comprises at least one preferably mirror polished external surface of the article.

**16.** An article as claimed in claim 15, characterised in that the phosphorescent substance has the following characteristics:

```
-   wavelength         520 nanometres;

-   brilliance expressed in millicandles/m²

    130             3 minutes after excitation

     32      10          "          "

      9      30          "          "

      4      60          "          "

   0.32     500          "          "
```

**17.** An article as claimed in claim 16, characterised by comprising granulated marble or silica of maximum particle size between 1 and 4 mm, powdered marble or silica of maximum particle size indicatively between 0.1 and 0.3 mm, and preferably white cement.

**18.** An article as claimed in claim 17, characterised by comprising 55% of granulated marble or silica, 25% of powdered marble or silica and 20% of white cement, and phosphorescent substance in a quantity of 50% of the weight of the cement.

**19.** An article as claimed in claim 18, characterised by being impregnated with a polymerizable monomer.

**20.** An article as claimed in claim 19, characterised in that said monomer is polymethylmethacrylate.

**21.** An article as claimed in claim 20, characterised by being a sheet with unfinished dimensions of up to 308 x 126 cm and an unfinished thickness of between 10 and 53 mm.

**22.** An article as claimed in claim 16, characterised in that the rigid laminar structure comprises a synthetic resin formed from catalyzed polyester or epoxy resins.

**23.** An article as claimed in claim 22, characterised in that the rigid structure comprises granulated marble or silica of maximum particle size indicatively between 1 and 6 mm, and powdered marble or silica of maximum particle size indicatively between 0.06 and 0.3 mm.

**24.** An article as claimed in claim 23, characterised by comprising 56% of granulated marble or silica, 37% of powdered marble or silica and 7% of catalyzed polyester or epoxy resin; a phosphorescent substance being added in a quantity of 10% of the weight of the article.

6

**25.** An article as claimed in claim 24, characterised by being a sheet with unfinished dimensions of up to 308 x 126 cm and an unfinished thickness of between 10 and 53 mm.

**26.** The use of a phosphorescent article to form luminescent indication devices.

**27.** The use of a phosphorescent article to form luminescent facings for the building industry.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 426 919 (GRAVISSE)<br><br><br><br>* the whole document *<br>--- | 1,2,4-6,<br>11-14,<br>16-18,<br>22-24,<br>26,27 | C09K11/02 |
| X | FR-A-2 168 685 (GRAVISSE)<br><br><br><br>* the whole document *<br>--- | 1,2,4-6,<br>11-14,<br>16-18,<br>22-24,<br>26,27 | |
| X | GB-A-2 017 741 (JOHN ERNEST SHAW &AL)<br><br>* the whole document *<br>--- | 1,2,4,<br>11-13,<br>26,27 | |
| X | GB-A-2 085 465 (KÖZPONTI BANYASZATI)<br><br>* the whole document *<br><br><br>----- | 1,2,<br>25-27 | TECHNICAL FIELDS SEARCHED (Int. Cl.5)<br><br>C09K<br>C09D<br>F21K |

The present search report has been drawn up for all claims

| Place of search | Date of completion of the search | Examiner |
|---|---|---|
| THE HAGUE | 03 FEBRUARY 1992 | DROUOT M.C. |